# EUROPEAN PATENT APPLICATION

(11) **EP 2 821 938 A1**
(43) Date of publication of application: **07.01.2015**
(21) Application number: 13754712.1
(22) Date of filing: 27.02.2013
(51) Int. Cl.: G06K 9/46, G06K 9/20

(54) **METHOD AND DEVICE FOR NOTIFICATION OF FACIAL RECOGNITION ENVIRONMENT, AND COMPUTER-READABLE RECORDING MEDIUM FOR EXECUTING METHOD**

(30) Priority: 28.02.2012 KR 20120020523
(71) Applicant: Intel Corporation, Santa Clara, CA 95054 (US)
(72) Inventor: PARK, Min Je, Gyeonggi-do 462-751 (KR); KIM, Tae Hoon, Seoul 135-512 (KR)
(74) Representative: BRP Renaud & Partner mbB Rechtsanwälte Patentanwälte Steuerberater
(86) International application number: PCT/KR2013/001556
(87) International publication number: WO 2013/129825

(57) **Abstract**

The present invention relates to a method for the notification of a facial recognition environment which: acquires an input image inputted in a preview state; compares feature information of a face included in the input image with feature information of reference person images stored in a predetermined database to determine, in real-time, whether the input image satisfies a preset effective photographing condition which is information regarding a condition required to recognize the face included in the input image at a higher accuracy than a preset one; and provides a user with a preset photographing guide feedback corresponding to whether or not the preset effective photographing condition has been satisfied. By using the method, the state of a facial image detected for facial recognition is checked in advance, and if it is determined that an element unsuitable for facial recognition exists, the determined result is notified to the user to let the user remove an obstructive environment which interferes with the recognition of the face thereby improving a success rate of the facial recognition.

## Description

### Technical Areas

The present invention relates to the method and device for the notification of a facial recognition environment and the computer-readable recording media for executing this method, wherein the state of a facial image detected for facial recognition is checked, and if any part is found to be unsuitable for facial recognition, it is notified to the user in advance to let the user adjust the user's position or improve or remove an obstructive environment which interferes with the recognition of the face thereby improving a success rate of the facial recognition, and any cause unsuitable for facial recognition is notified to the user to ensure that the user can be aware of this.

### Prior Art

Biometric technology is a technology to recognize the physical features of fingerprint, face, iris and vein which vary from person to person. Since these physical features can't be stolen or duplicated by other people unlike keys or passwords, and have no risk to be changed or lost, they can be used in such areas as security.

Since dual face recognition technology includes a technology that detects facial area in a video or photo image and then identifies the identity of the face included in the detected facial area, it can be used for various applications suiting the needs of the smartphone era as well as security area.

In general, the facial recognition technology makes it possible to compare a detected facial image with the facial image pre-stored in a storage part such as database after detecting facial area in a video or photo image and determine whether or not they match with each other.

However, in order to improve the accuracy of the facial recognition technology operating this way, the facial image acquired from a video or photo needs to be inputted clearly enough to be comparable to the facial image pre-stored in a database as a precondition. But the inputted facial image can't always be maintained at a level appropriate for facial recognition.

Therefore, when a facial image inputted is of a level that doesn't allow normal facial recognition due to various causes such change in user's position, instable posture or surrounding environment, it needs to be notified where an element unsuitable for facial recognition is located on the facial image.

For this purpose, an invention titled "METHOD FOR PROCESSING TRANSACTION IN BANK TRANSACTION MACHINE HAVING FACE RECOGNIZING AND FAIR TRANSACTION INTRODUCING FUNCTION" of publication number 10-1999-0037927 published on May 25, 1999 disclosed a method for processing transaction in bank transaction machine having face recognizing and fair transaction introducing function, wherein when facial recognition is not accomplished successfully at a bank transaction machine having facial recognition function equipped with a facial recognition system, the normal transaction is introduced by showing user's position, facial shape and reason for failure to the user to let the user adjust the user's position and remove an obstructive environment which interferes with the recognition of the face.

However, such a prior art notifies an element unsuitable for facial recognition ex post facto when facial recognition was tried but ended up as a failure and thus a user is not allowed to take a proactive measure in advance at the facial image inputting stage to avoid such an error. Therefore, such a prior art has a problem in that it takes a substantially long time to correct any error existing on a facial image and complete the facial recognition.

### Detailed Explanation of the Invention

### Technical Task

The objective of the present invention is to solve all of the problems described above.

And the objective of the present invention is to improve the success rate of facial recognition by checking the state of a facial image detected for facial recognition in advance, and if it is determined that an element unsuitable for facial recognition exists, notifying the determined result to the user to let the user improve or remove an obstructive environment which interferes with the recognition of the face.

Another objective of the present invention is to notify a specific reason for obstruction to the user in real time when an obstructive environment has been recognized as described above to ensure that the user can be aware of this.

### Problem Solving Method

The representative configuration of the present invention to achieve the objectives described above is as follows:

According to one embodiment of the present invention, a method for the notification of a facial recognition environment is comprised of: (a) a step of acquiring an input image inputted in a preview state; (b) a step of comparing feature information of a face included in the input image with feature information of reference person images stored in a predetermined database to determine, in real-time, whether the input image satisfies a preset effective photographing condition which is information regarding a condition required to recognize the face included in the input image at a higher accuracy than a preset one; and (c) a step of providing a user with a preset photographing guide feedback corresponding to whether or not the preset effective photographing condition has been satisfied.

According to another embodiment of the present invention, a device for the notification of a facial recognition environment is comprised of: an image inputting part that acquires an input image inputted in a preview state; a condition determining part that compares feature information of a face included in the input image with feature information of reference person images stored in a predetermined database to determine, in real-time, whether the input image satisfies a preset effective photographing condition which is information regarding a condition required to recognize the face included in the input image at a higher accuracy than a preset one; and a feedback providing part that provides a user with a preset photographing guide feedback corresponding to whether or not the preset effective photographing condition has been satisfied.

In addition, the present invention further provides the computer readable recording medium for recording the computer program to implement other method, device and said method to embody the present invention.

### Effects of This Invention

And the present invention is effective in improving the success rate of facial recognition by checking the state of a facial image detected for facial recognition in advance, and if it is determined that an element unsuitable for facial recognition exists, notifying the determined result to the user in real time to let the user improve or remove an obstructive environment which interferes with the recognition of the face.

Further, the present invention is effective in notifying a specific reason for obstruction to the user when an obstructive environment has been recognized as described above to ensure that the user can be aware of this. Through this, the reliability of a facial recognition system is improved further, the user's inconvenience is relieved by enabling the user to recognize a deficient part in performing facial recognition, and the use of a facial recognition system can be spread widely by perfecting the function of a facial recognition system ultimately.

Further, according to the existing inventions, the terminal itself was just blamed for poor performance in recognizing a face, but according to the present invention, the user's discontent can be resolved rationally by making it known that the poor performance is not because of the terminal but because of the fact that the user himself/herself is in an obstructive environment which interferes with facial recognition.

### Concise Explanation of the Drawings

FIG. 1 is a block diagram illustrating the schematic composition of a facial recognition system in accordance with an embodiment example of the present invention.
FIG. 2 is a block diagram illustrating the configuration of a facial detection device in accordance with an embodiment example of the present invention.
FIG. 3 is a block diagram illustrating the configuration of a facial recognition device in accordance with an embodiment example of the present invention.
FIG. 4 is a block diagram illustrating the composition of a device for the notification of a facial recognition environment in accordance with an embodiment example of the present invention.
FIG. 5 is a drawing to explain a method for determining whether an inputted image satisfies lighting condition in accordance with an embodiment example of the present invention.

### Best Form for the Implementation of the Invention

The detailed explanation on the present invention described later will be provided referring to the attached drawings as an example of a specific embodiment to implement the present invention. These embodiments will be explained in detail enough to implement the present invention by a person having ordinary skill in the art. It must be understood that various embodiments of the present invention are different from each other but they don't have to be mutually exclusive. For example, the specific configuration, structure and characteristics described here can be embodied into another embodiment without departing from the spirit and scope of the present invention in relation to one embodiment. And it must also be understood that the position and deployment of individual components in each embodiment disclosed can be changed without departing from the spirit and scope of the present invention. Therefore, the detailed explanation described later is not given with a view to restrict the present invention, but the scope of the present invention, if explained properly, will be restricted only by the assertions made by the claims and all equivalent scope along with the attached claims. Similar reference numbers on the drawings refer to identical or similar functions throughout various aspects.

The ideal embodiments of the present invention will be explained in detail referring to the drawings to ensure that a person having ordinary skill in the art to which this invention belongs to can easily implement the present invention.

### [Ideal Embodiments of the Present Invention]

### Composition of the Whole System

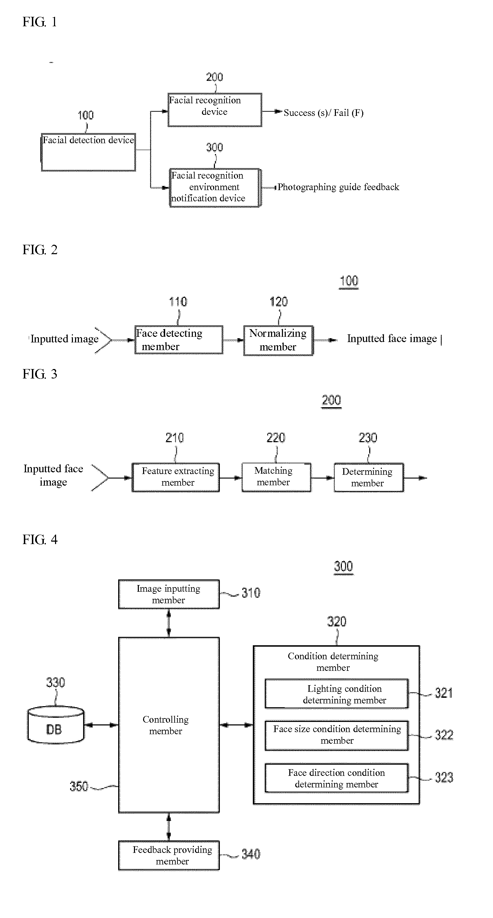

FIG. 1 is a block diagram illustrating the schematic composition of a facial recognition system in accordance with an embodiment example of the present invention.

Referring to FIG. 1, the facial recognition system of the present invention can include a facial detection device (100), a facial recognition device (200) and a facial recognition environment notification device (300).

Whereas, The facial recognition system according to one embodiment example of the present invention is a digital device equipped with a memory means just like personal computer (for example, tablet computer, notebook computer, etc.), PDA, web pad, mobile phone, etc. and a microprocessor. Therefore, any portable digital device equipped with operation ability can be adopted as a facial recognition system according to the present invention. However, facial detection device (100), facial recognition device (200) and facial recognition environment notification device (300) don't have to be configured as one system necessarily but various modified embodiments can be introduced depending on convenience.

First, the facial detection device (100) according to an embodiment example of the present invention performs a function of detecting facial area in a sensed image using an FD (Face Detection) technology if a face is included in an image photographed by an imaging device (not illustrated). Various prior technologies that have been disclosed can be used as the FD technology. For example, it can be performed using specific patterns selected through the leaning by an Adaboost learning algorithm. With regard to a method and device for detecting face in an image, the applicant of the present invention has already applied for a patent through the patent application number 10-2011-0114160 titled 'Method and device for detecting face and computer-readable recording media for executing this method,' and the invention described above can be integrated with this invention.

On the other hand, the facial detection device (100) can also acquire the information about the direction of a facial area in an image sensed through a HT (Head Tracking) technology. Various prior technologies that have been disclosed can be applied as the HT technology, and the direction information of the facial area acquired using the HT technology can be used in determining the facial direction condition in the facial recognition environment notification device (300).

This facial detection device (100) can perform a function of detecting whether a face appears in an input image inputted in a preview state.

Further, the facial recognition device (200) according to an embodiment example of the present invention compares the information about the facial image (i.e., feature information) detected through the facial detection device (100) with the information about each of the plurality of facial images (i.e., feature information) stored in a database (not illustrated) and outputs the facial recognition result. In other words, if the facial image detected through the facial detection device (100) is determined to have a similarity of above a preset level to a specific person by detecting whether it is the same with (or similar to) at least one of the multiple pre-stored facial images, a signal indicating match, i.e., a signal indicating that a recognition has been made as the specific person can be outputted as a facial recognition result, or on the contrary, if it is determined that a similarity of above a preset level is not found in comparison with anyone, a signal indicating non-match can be outputted as the facial recognition result. And each of the multiple facial images stored in the database can have an identification code, and the facial recognition device (200) can output the identification code of a matching facial image among the multiple facial images as a signal indicating match. With regard to a method and device for recognizing a detected facial image by matching it with a pre-stored face, the applicant of the present invention has already applied for a patent through the patent application number 10-2011-0105547 titled 'Method and device for recognizing face and computer-readable recording media for executing this method,' and the invention described above can be integrated with this invention.

Finally, the facial recognition environment notification device (300) according to an embodiment example of the present invention performs a function of receiving the image with a detected facial area through the above facial detection device (100) and notifying the state of the facial recognition environment to the user. In other words, the facial image detected through the facial detection device (100) is compared with at least one image among the multiple pre-stored facial images to determine, in real-time, whether the detected facial image satisfies a preset effective photographing condition which is information regarding a condition required to recognize the face included in the detected facial image (i.e., input image) at a higher accuracy than a preset one; and a preset photographing guide feedback can be provided to the user depending on whether or not the preset effective photographing condition has been satisfied. If a signal indicating inappropriateness for facial area recognition is notified by the facial recognition environment notification device (300), the user can improve the condition determined to be inappropriate and perform the facial recognition process and thus, the probability of success in facial recognition can be improved. The facial recognition environment notification device (300) will be described in more detail later referring to the following FIG. 4.

FIG. 2 is a block diagram illustrating the configuration of the facial detection device in accordance with an embodiment example of the present invention.

Referring to FIG. 2, the facial detection device (100) of the present invention can include a face detecting member (110) and a normalizing member (120).

The face detecting member (110) can detect facial area from an inputted image. The face detecting member (110) can detect eyes and also detect eyelids, nose, mouse, etc. additionally for detecting facial area. One of the reasons why the detection is made as described above is to arrange the inputted facial image in the same direction with the pre-stored facial image.

The normalization member (120) can normalize a detected facial image to a gray image of a pre-determined size. Thus, the normalizing member (120) may aim to perform a detection task with the facial image that has the same size and arrangement with the pre-stored facial images when the inputted image has different size and arrangement from the facial image pre-stored in the database (not illustrated) and includes other image than the facial image. However, this normalizing member (120) may not be needed necessarily.

FIG. 3 is a block diagram illustrating the configuration of the facial recognition device in accordance with an embodiment example of the present invention.

Referring to FIG. 3, the facial detection device (200) can include a feature extracting member (210), a matching member (220) and a determining member (230).

The feature extracting member (210) can extract facial feature information from a facial image.

The matching member (220) performs a function of matching the feature information acquired by the feature extracting member (210) with the feature information of each of the multiple facial images in the database (not illustrated) to search an image with a high similarity.

More specifically, when the matching member (220) conducts facial matching, there can be two different methods: one is to compare faces generally and the other is to compare such components as eyes, nose, mouse, etc.

In case of the latter method, the matching member (220) can determine a person with high similarity by comparing such components as eyes, nose, mouth, etc. with such components as eyes, nose, mouth, etc. included in the facial area of a facial image existing in the database (not illustrated). Herein, the similarity of the whole face can be obtained using the weighted sum calculated by applying the weight of each component of the face. At this time, the weight of each component can be determined based on the importance in human perception.

According to another embodiment example of the present invention, each component can be extracted and recorded in the facial components database (not illustrated) for each of the multiple personal images recorded in the database (not illustrated), and in this case, the matching task conducted by the matching member (220) can get much faster.

FIG. 4 is a block diagram illustrating the composition of the facial recognition environment notification device (300) in accordance with an embodiment example of the present invention.

Referring to FIG. 4, the facial recognition environment notification device (300) includes an image inputting member (310), a condition determining member (320), a database (330), a feedback providing member (340), and a controlling member (350), and the condition determining member (320) can include a lighting condition determining member (321), a face size condition determining member (322) and a face direction condition determining member (323).

The facial recognition environment notification device (300) receives an image with detected facial area from the facial detection device (100) and determines whether the received image satisfies the preset effective photographing condition, and provides the user with a preset photographing guide feedback corresponding to whether or not the preset effective photographing condition has been satisfied.

For this function, the image inputting member (310) interfaces with the facial detection device (100), and performs a function of receiving the image with detected facial area as FD technology is applied in the facial detection device (100). Further, it can also perform a function of receiving an image including the direction information of facial area as FD technology and HT technology are applied in the facial detection device (100).

The condition determining member (320) performs a function of determining whether or not the inputted image through the image inputting member (310) satisfies the preset effective photographing condition. The preset effective photographing condition can be at least one of lighting condition, face size condition and face direction condition. The satisfaction of each condition is determined at the following locations: lighting condition at the lighting condition determining member (321), face size condition at the face size condition determining member (322) and face direction condition at the face direction condition determining member (323).

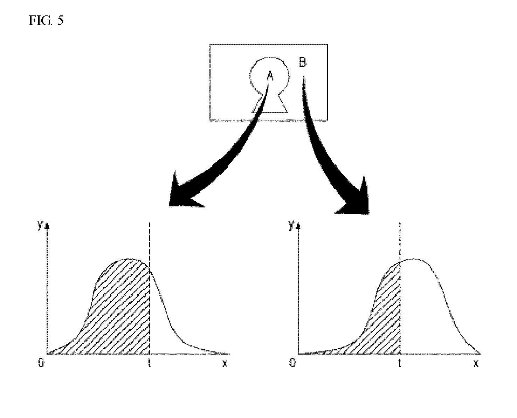

FIG. 5 is a drawing to explain a method for determining whether an inputted image satisfies lighting condition in accordance with an embodiment example of the present invention.

Referring to FIG. 5, the lighting condition determining member (321) receives the image with detected facial area from the facial detection device (100) and divides the received into facial area (A) and non-facial area (B) and the histogram of each separated area is operated.

The histogram shows the brightness of each pixel in a digital image signal which has been classified and organized based on their level and means the distribution of an image at the level of pixels. If an image is generally dark, the histogram shows more distribution on dark values (values close to 0), whereas if an image is generally bright, the histogram shows more distribution on bright values (values close to 255). The histogram is appropriate to show the overall nature of an image rather than the detailed information about the elements making up a subject in an image. And the histogram has such strengths as relatively being unaffected by a geometric transformation such as the rotation or motion of a subject and the simplicity of implementation algorithm.

On the histogram illustrated in FIG. 5, the x axis of the graph indicates brightness and the y axis indicates the number of pixels and a random threshold value (t) can be set up among the x axis values. The lighting condition determining member (321) calculates each standard rate using each histogram about the facial area and the non-facial area. The standard rate means the rate calculated by dividing the number of pixels with a brightness of below the threshold value illustrated as an area with slanted lines by the number of the total pixels illustrated as a solidly colored area.

*If the standard rate for facial area described above is defined as the first standard rate and the standard rate for non-facial area is defined as the second standard rate, the lighting condition is always determined to have been satisfied when the first standard rate is lower than the preset threshold rate, and it is determined as backlit when the second standard rate is lower than the threshold rate. And when both the first salvage treatment and the second standard rate are higher than the threshold rate, the intensity of light is determined to be insufficient.

And the facial area of the inputted image from the image inputting member (310) is divided into the first area and the second area like right and left or top and bottom, and if the difference between the two areas exceeds the threshold value when the histogram distribution of each part is compared, it is determined that shade has been generated because the lighting direction was not good when taking a picture.

The face size condition determining member (322) determines whether the size of the facial area in the image inputted through the image inputting member (310) is larger than the threshold size, and if the facial area doesn't reach the threshold size, it determines that the effective photographing condition has not been satisfied. The size of the facial area on an image can be calculated in the facial detection device (100) using the face detection algorithm which has already been known. For example, if the facial part exists in the facial area covering already 100 pixels, it is determined to have satisfied the effective photographing condition. On the contrary, the face size condition determining member (322) can also perform the function of determining that the effective photographing condition has not been satisfied when the size of the facial area in the image inputted through the image inputting member (310) is excessively large so part of the facial area has been cut off.

The face size condition determining member (323) perform the function of determining that the effective photographing condition has not been satisfied when the face located within the facial area has been rotated by a designated angle. For example, it can determine that the effective photographing condition has not been satisfied when a face deviates from the center to the left, right, top or bottom by 15 degrees or more. Herein, 15 degrees is a value used merely as an example and it is needless to say that diverse variations are possible. On the other hand, the face direction condition determining member (323) can determine the face direction by directly performing HT or determine the face direction based on the information about the result of FD or HT conducted in the facial detection device (100).

The database (330) can store the image information inputted through the image inputting member (310) and store such data as threshold value, threshold rate, threshold size, etc. to determine whether the face in the inputted image can be recognized in the condition determining member (320). And as described below, even if it failed in face recognition, an image which is believed to have good facial recognition environment can be stored.

The feedback providing member (340) provides a user with the photographing guide feedback related to the facial recognition environment based on the information evaluated in the condition determining member (320).

More specifically, when an inputted image has been determined as backlit, the lighting condition determining member (321) can provide a photographing guide feedback instructing to rotate the face direction or to take a picture at a place with good lighting direction since quantity of light is sufficient but lighting is not good. Or detailed information about the environment that interferes with facial recognition is simply provided instead. As another example, when intensity of light is not sufficient for facial recognition, it can provide a photographing guide feedback instructing to move to a lighter place since the intensity of light is not sufficient. As still another example, when shade is determined to have been formed because the difference in each histogram value between the first area and the second area into which the facial area has been divided is above the preset threshold value, it can provide a photographing guide feedback indicating that the lighting direction is not good.

And when the facial area of the inputted image is determined to be excessively small, the face size condition determining member (322) can provide a photographing guide feedback instructing to move closer to the imaging device, and on the contrary, when the facial area of the inputted image is determined to be excessively large, it can provide a photographing guide feedback instructing to stay farther from the imaging device.

Further, when the direction of the facial area of the inputted image deviates from the straight forward looking direction of the imaging device by more than a preset angle, the face direction condition determining member (323) can provide a photographing guide feedback instructing to rotate the face.

As described above, the feedback providing member (340) can deliver a signal using at least one method out of text display output, color design display output, audio output or vibration to provide a photographing guide feedback to accomplish a desirable facial recognition environment.

On the other hand, the facial recognition device (200) and the facial recognition environment notification device (300) receive an image separately from the facial detection device (100) and perform the function of each device in parallel and thus, as a result of the operation of the facial recognition system, the following four results can be derived: First, when the facial recognition device (200) succeeds in facial recognition and the facial recognition environment notification device (300) determines that the effective photographing condition is satisfied; secondly, when the facial recognition device (200) succeeds in facial recognition and the facial recognition environment notification device (300) determines that the effective photographing condition is not satisfied; thirdly, when the facial recognition device (200) fails in facial recognition and the facial recognition environment notification device (300) determines that the effective photographing condition is satisfied; and fourthly, when the facial recognition device (200) fails in facial recognition and the facial recognition environment notification device (300) determines that the effective photographing condition is not satisfied.

Among them, the first and fourth cases can be considered to have obtained proper results since the results from the operation of the facial recognition device (200) and the facial recognition environment notification device (300) are the same; the second case can be considered to have been caused by outstanding performance of the facial recognition engine or luck since the facial recognition environment notification device (300) determined that the effective photographing condition was not satisfied but the face was recognized successfully; and in the third case, the feedback providing member (340) can provide an addition guide feedback instructing to register the relevant image as a comparison image for facial recognition with the database (330) since the facial recognition environment notification device (300) determines that the effective photographing condition was satisfied but facial recognition didn't come through (Of course, it is also possible to have such an image to be registered automatically without this feedback to enhance the facial recognition rate in the future).

The controlling member (350) performs a function of controlling the data flow between the image inputting member (310), the condition determining member (320), the database (330) and the feedback providing member (340). In other words, the controlling member (350) performs the control function to ensure that the image inputting member (310), the condition determining member (320), the database (330) and the feedback providing member (340) perform their own function by controlling the data flow between the components.

The embodiments in accordance with the present invention described so far can be embodied in the form of a program instruction that can be implemented through various computer components and recorded on a computer readable recording medium. The computer readable recording medium can include program instruction, data file, data structure, etc. separately or in combination. The program instruction recorded on said computer readable recording medium can be one designed and configured specifically for the present invention or one that is recommended as it is well known to a person having ordinary skill in the computer software area. The examples of the computer readable recording medium include the hardware devices configured specially to store and run instruction like magnetic media such as hard disk, floppy disk and magnetic tape, optical recording media such as CD-ROM and DVD, magneto-optical media like floptical disk, ROM, RAM and flash memory. The examples of program instruction include high level language codes that can be run by a computer using such means as interpreter as well as machine language codes created by a compiler. Said hardware device can be formed to run with one or more software module to carry out the processing of the present invention and the same applies to the reverse.

Though the present invention has been described so far with particular items such as specific components and by limited embodiments and drawings, they have been provided merely to facilitate the overall understanding on the present invention and the present invention is not limited by the embodiments described above and a person having ordinary skill in the art to which the present invention belongs may be able to attempt various corrections and modifications in these items.

Therefore, the idea of the present invention shall not be limited to the embodiments described above and the idea of the present invention encompass not only the scope of patent claims described later but also all modifications made equally or equivalently with the scope of these claims.

## Claims

1. A method for the notification of a facial recognition environment, which is comprised of: (a) a step of acquiring an input image inputted in a preview state; (b) a step of comparing feature information of a face included in the input image with feature information of reference person images stored in a predetermined database to determine, in real-time, whether the input image satisfies a preset effective photographing condition which is information regarding a condition required to recognize the face included in the input image at a higher accuracy than a preset one; and (c) a step of providing a user with a preset photographing guide feedback corresponding to whether or not the preset effective photographing condition has been satisfied.

2. The method for the notification of a facial recognition environment of Claim 1, wherein the inputted image is registered as a reference personal image newly with the database when facial recognition didn't come through even if it was determined that the effective photographing condition was satisfied at the above step (b).

3. The method for the notification of a facial recognition environment of Claim 1, and in the above step (b), wherein the preset effective photographing condition include at least one of lighting condition, face size condition and face direction condition.

4. The method for the notification of a facial recognition environment of Claim 3, wherein the lighting condition is satisfied when the first standard rate calculated using the histogram about the facial area of the inputted image is below the preset threshold rate.

5. The method for the notification of a facial recognition environment of Claim 4, wherein the first standard rate is calculated by dividing the number of pixels with a brightness of below the preset threshold value by the number of the total pixels.

6. The method for the notification of a facial recognition environment of Claim 4, which further includes a step of determining whether the second standard rate calculated using the histogram about the non-facial area of the inputted image is below the preset threshold rate when the lighting condition is not satisfied.

7. The method for the notification of a facial recognition environment of Claim 6, wherein a photographing guide feedback including the information indicating that quantity of light is sufficient but it is backlit is provided at the above step (c) when the second standard rate is below the threshold rate.

8. The method for the notification of a facial recognition environment of Claim 6, wherein a photographing guide feedback including the information indicating that quantity of light is not sufficient is provided at the above step (c) when the second standard rate exceeds the threshold rate.

9. The method for the notification of a facial recognition environment of Claim 3, which further includes a step of determining whether the difference in each histogram value between the first area and the second area into which the facial area of the inputted image has been divided is below the preset threshold value.

10. The method for the notification of a facial recognition environment of Claim 9, wherein a photographing guide feedback including the information indicating that the direction of lighting is not good is provided at the above step (c) when the difference in histogram value exceeds the threshold rate.

11. The method for the notification of a facial recognition environment of Claim 3, wherein the face size condition is satisfied when the size of the facial area on the inputted image is larger than the preset threshold size.

12. The method for the notification of a facial recognition environment of Claim 11, wherein the size of the facial area on the inputted image is acquired using the FD technology in the facial detection device.

13. The method for the notification of a facial recognition environment of Claim 3, wherein the face direction condition is satisfied when the gaze direction of the face of the inputted image deviates from the straight forward looking direction of the imaging device by less than a preset angle.

14. The method for the notification of a facial recognition environment of Claim 13, wherein the gaze direction of the face on the inputted image is acquired using the HT technology.

15. The method for the notification of a facial recognition environment of Claim 1, wherein the photographing guide feedback is provided in the form of at least one of text display output, color design display output, audio output or vibration at the above (c) step.

16. A device for the notification of a facial recognition environment, which is comprised of: an image inputting part that acquires an input image inputted in a preview state; a condition determining part that compares feature information of a face included in the input image with feature information of reference person images stored in a predetermined database to determine, in real-time, whether the input image satisfies a preset effective photographing condition which is information regarding a condition required to recognize the face included in the input image at a higher accuracy than a preset one; and a feedback providing part that provides a user with a preset photographing guide feedback corresponding to whether or not the preset effective photographing condition has been satisfied.

17. The device for the notification of a facial recognition environment of Claim 16, wherein the condition determining member registers the inputted image as a reference personal image newly with the database when facial recognition didn't come through even if it was determined that the effective photographing condition was satisfied.

18. The device for the notification of a facial recognition environment of Claim 16, wherein the condition determining member includes at least one of a lighting condition determining member, a face size condition determining member and a face direction condition determining member.

19. The device for the notification of a facial recognition environment of Claim 18, wherein the lighting condition determining member determines that it is satisfied when the first standard rate calculated using the histogram about the facial area of the inputted image acquired from the image inputting member is below the preset threshold rate.

20. The device for the notification of a facial recognition environment of Claim 19, wherein the first standard rate is calculated by dividing the number of pixels with a brightness of below the preset threshold value by the number of the total pixels.

21. The device for the notification of a facial recognition environment of Claim 19, wherein the lighting condition determining member determines whether the second standard rate calculated using the histogram about the non-facial area of the inputted image acquired from the image inputting member is below the preset threshold rate when it determines that the lighting condition is not satisfied.

22. The device for the notification of a facial recognition environment of Claim 21, wherein a photographing guide feedback including the information indicating that quantity of light is sufficient but it is backlit is provided by the feedback providing member when the second standard rate is below the threshold rate.

23. The device for the notification of a facial recognition environment of Claim 21, wherein the feedback providing member provides a photographing guide feedback including the information indicating that quantity of light is not sufficient when the second standard rate exceeds the threshold rate.

24. The device for the notification of a facial recognition environment of Claim 18, wherein the lighting condition determining member determines whether the difference in each histogram value between the first area and the second area into which the facial area of the inputted image acquired from the image inputting member has been divided is below the preset threshold value.

25. The device for the notification of a facial recognition environment of Claim 24, wherein the feedback providing member provides a photographing guide feedback including the information indicating that the direction of lighting is not good when the difference in histogram value exceeds the threshold rate.

26. The device for the notification of a facial recognition environment of Claim 18, wherein the face size condition determining member determines that the face size condition is satisfied when the size of the facial area on the inputted image acquired from the image inputting member is larger than the preset threshold size.

27. The device for the notification of a facial recognition environment of Claim 26, wherein the size of the facial area on the inputted image is acquired using the FD technology in the facial detection device.

28. The device for the notification of a facial recognition environment of Claim 18, wherein the face direction condition determining member determines that the face direction condition is satisfied when the gaze direction of the face of the inputted image acquired from the image inputting member deviates from the straight forward looking direction of the imaging device by less than a preset angle.

29. The device for the notification of a facial recognition environment of Claim 28, wherein the gaze direction of the face on the inputted image is acquired using the HT technology.

30. The device for the notification of a facial recognition environment of Claim 16, wherein the photographing guide feedback outputted by the feedback providing member is provided in the form of at least one of text display output, color design display output, audio output or vibration.

31. Computer readable recording media recorded with a computer program to execute a method specified in one of Claims 1 to 15.
